# EUROPEAN PATENT SPECIFICATION

(11) **EP 1 134 512 B1**
(45) Date of publication and mention of the grant of the patent: **28.04.2004**
(21) Application number: 01200426.3
(22) Date of filing: 06.02.2001
(51) Int. Cl.: F24J 2/04, E04D 13/18

(54) **Constructional element**
Konstruktionselement
Element de construction

(30) Priority: 08.02.2000 NL 1014321
(43) Date of publication of application: 19.09.2001
(73) Proprietor: R & R Systems B.V., 5427 PW Boekel (NL)
(72) Inventor: Claesen, Robertus Maria, 5427 PW Boekel (NL)
(74) Representative: Veldman-Dijkers, Cornelia G.C., Ir.

(56) References cited:
- EP-A- 0 278 489
- AT-B- 398 599
- DE-A- 2 535 581
- DE-A- 2 922 678
- DE-U- 29 904 345

## Description

The invention relates to a constructional element comprising at least one construction plate comprising an insulating layer, which construction element furthermore comprises at least one plate-shaped panel connected to the construction plate, which panel comprises a number of flow channels arranged in parallel, side-by-side relationship, which open into a fluid inlet chamber with first ends and which open into a fluid outlet chamber with second ends, wherein the fluid inlet chamber and the fluid outlet chamber are integrally connected with the panel in a liquid-tight manner and are provided with connecting elements integrally connected therewith for connection to a liquid supplying and discharging device.

Such a constructional element is known per se for example from DE-A1-25.35.581.

By a constructional element as disclosed in DE-A1-25.35.581 fluid, located in the flow channels, will be heated by the sunlight. However, the fluid will only be heated by sunlight falling directly on the plate shaped panel.

The object of the invention is to provide a constructional element which has been fitted with a plate shaped panel in a relatively simple manner, by means of which panel energy is obtained from the heat transfer in a relatively simple manner, in order to maintain the desired temperature inside a building, if desired.

This objective is accomplished with the constructional element according to the invention in that said construction plate includes a metal layer, whereby the plate-shaped panel abuts against said metal layer and is disposed on a side of the metal plate that faces towards said insulating layer.

When sun shines on the metal plate, the metal plate will become relatively hot. As a result, the panel and the liquid flowing therethrough will be heated. If sunshine falls on a place on the metal plate below which only the insulating layer is located, the heat accumulating in the metal plate will be transferred through the metal plate to the panel due to which the liquid flowing therethrough will be heated. Due to the metal layer sunshine falling on the whole constructional element will be used to heat the liquid in the panels.

If the constructional element is used to cool the environment, the whole surface of the metal plate is also being used.

With the constructional element according to the invention the fluid inlet chamber and the fluid outlet chamber are connected to the plate-shaped panel in a fluid-tight manner at the factory already. This makes it possible to test at the factory already whether the plate-shaped panel is indeed liquid tight.

Then the plate-shaped panel and the fluid inlet chamber and the fluid inlet chamber that are integrally connected therewith and the connecting elements integrally connected therewith can be incorporated in a constructional element.

The only thing that needs to be done at the construction site is to connect pipes to the connecting elements, so that a liquid can be supplied to the plate-shaped panel.

The use of a liquid instead of air has considerable advantages, because a greater heat transfer can be effected therewith. When a liquid is used, the importance of a proper seal between the panel and the inlet and outlet chamber is much greater, since leakage of the liquid may cause damage. By fitting the chambers to the panel and testing them in advance, a proper seal is ensured. The connecting of the pipes to the connecting elements can be carried out in a simple manner by means of rapid-action couplings.

The invention furthermore relates to a roof construction provided with such a constructional element, as well as to a roof construction provided with tile laths and with tiles present thereon.

A liquid, for example water or glycol, is passed through the plate-shaped panel. In the summer said water or glycol will be heated by the relatively hot outside temperature. Said heated water or glycol can then be supplied to a heat pump or be stored underground. In the winter this relatively hot water or glycol can be used for heating the constructional elements of the building. In this manner it is readily possible to maintain a desired temperature in a building, both in the summer and in the winter.

It is also possible, of course, to heat and/or cool the water or other coolant in a different manner, as for example known from floor heating systems, or to use the heated or cooled liquid for other purposes.

The advantage of using the constructional elements a floor heating system is that relatively large surfaces can be provided with flow channels in a relatively simple manner. This in contrast to prior art systems, wherein flexible hoses must be laid out on a floor.

It is noted that DE-U1-299.04.345 discloses a constructional element including a number of flexible conduits, through which a fluid is passed. One drawback of such a system is the fact that the provision of a large number of conduits takes up a relatively great deal of time. In addition, all conduits must be individually connected to a fluid supplying and discharging device.

With a constructional element according to the invention it is only necessary to connect pipes to the connecting elements of the plate-shaped panels in order to connect a relatively large number of flow channels to a liquid supplying and discharging device.

The invention will now be explained in more detail with reference to the drawing, wherein:
Figure 1 is a perspective view of a plate-shaped panel;
Figure 2 shows a first embodiment of a plate-shaped panel;
Figure 3 shows a second embodiment of a constructional element according to the invention;
Figure 4 shows a third embodiment of a constructional element according to the invention; and
Figure 5 shows a roof construction according to the invention.

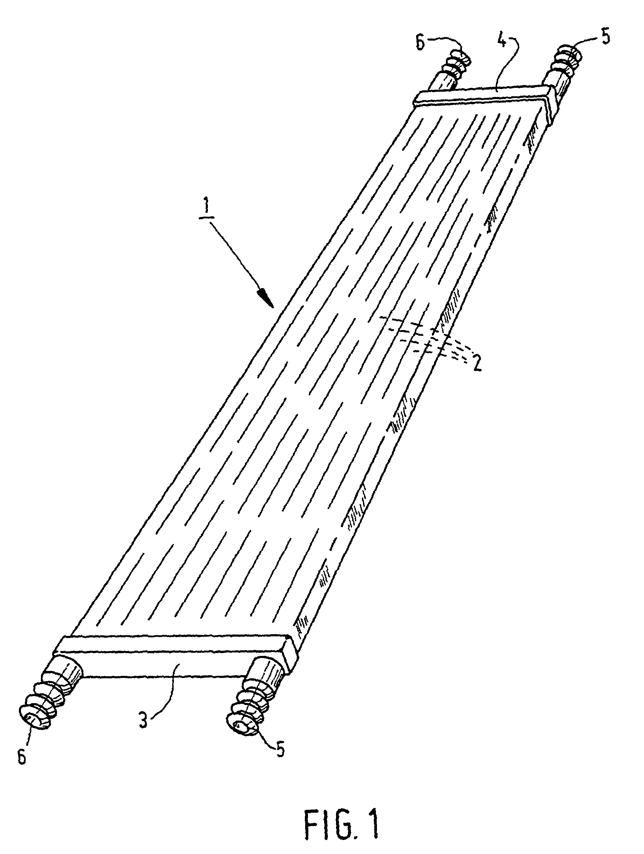

Figure 1 shows a plate-shaped panel 1 of a constructional element according to the invention.

Plate-shaped panel 1 includes a number of flow channels 2 arranged in parallel, side-by-side relationship, which flow channels open into a fluid inlet chamber 3 with first ends and into a fluid outlet chamber 4 with second ends. Fluid inlet chamber 3 and fluid outlet chamber 4 are each provided with two connecting stubs 5, 6, to which pipes are connected for interconnecting panels 1 disposed side by side or for connecting said panels 1 to a fluid supply and discharge pipe.

The fluid supply and discharge pipe is connected to a pump, by means of which the liquid, for example water, is pumped through the flow channels. The water may come from an underground water buffer, for example, and it may be returned to another underground water buffer.

It is also possible to use a so-called heat pump as the pump.

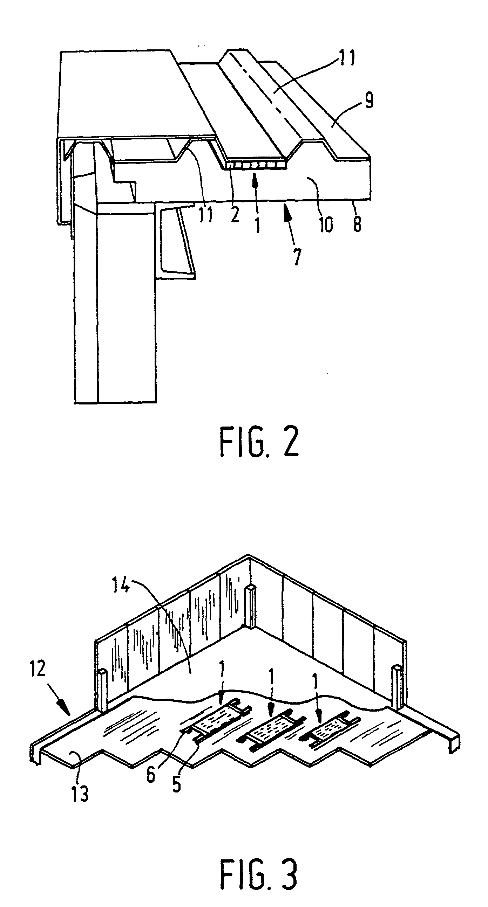

Figure 2 shows a first embodiment of a constructional element 7 according to the invention, which comprises two metal plates 8, 9, with a layer of an insulating material disposed therebetween. Constructional element 7 is used as a roof element. The upper plate 9 includes a number of parallel ribs 11. Disposed between ribs 11 are panels 1, with flow channels 2 extending parallel to ribs 11. Plate-shaped panel 1 is disposed on a side of the metal plate 9 that faces towards insulating layer 10, with one side of panel 1 abutting against metal plate 9. When the sun shines on the metal plate 9 in the summer, metal plate 9 will become relatively hot. As a result, the panel 1, which also abuts against metal plate 9, and the liquid flowing therethrough will be heated. The heated liquid can then be stored, for example in an underground reservoir. When it is desired to utilize the heat stored in the reservoir, the liquid can be pumped through other panels, which panels are directed towards the room to be heated with at least one side.

Figure 3 shows a second embodiment of a constructional element 12 according to the invention, wherein a number of panels 1 are schematically shown. Constructional element 12 is a floor heating element, which is built up of a supporting plate 13 and panels 1 fixed thereto. A cover layer 14, for example consisting of chipboard, can then be placed over panels 1. A liquid is pumped through the panels 1 in the manner already described above. The panels 1 then transfer heat to cover layer 14 or receive heat from cover layer 14, as a result of which the space present above the cover layer 14 is heated or cooled.

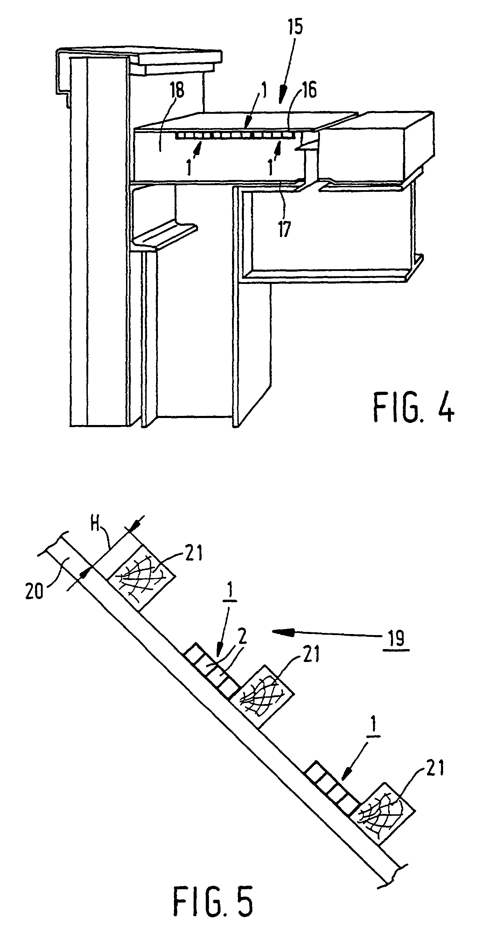

Figure 4 shows a third embodiment of a constructional element 15 according to the invention, which includes two parallel metal plates 16, 17 and an insulating layer 18 disposed therebetween. Constructional element 15 furthermore includes panels 1 extending parallel to plate 16. The operation of constructional element 15 is similar to that of constructional element 7.

Figure 5 shows a different type of roof construction 19 according to the invention. Roof construction 19 comprises a number of battens 20, which extend at an angle to the vertical, and substantially horizontally extending tile laths 21, which are fixed thereto. The dimension H of tile laths 21 is slightly larger than that of well-known tile laths. This makes it possible to position panels 1 between the tile laths 21, wherein the flow channels 2 of the panels 1 extend parallel to the tile laths 21. Roof tiles can then be placed on the laths 21 in a well-known manner. The roof tiles are heated by the sunlight in the summer. This heat will also cause the liquid present in the panels 1 to heat up. When said heated liquid is subsequently carried off, the space present under the roof construction 19 will remain relatively cool. Since the panels are relatively strong, a simple method can be used for placing them in abutment with the tile laths 21.

It is also possible to provide outside walls with panels in the above-described manner.

It is also possible to fit the roof elements 7, 15 with panels on the underside thereof.

## Claims

1. A constructional element (7, 15) comprising at least one construction plate comprising an insulating layer (10), which construction element (7, 15) furthermore comprises at least one plate-shaped panel (1) connected to the construction plate, which panel (1) comprises a number of flow channels (2) arranged in parallel, side-by-side relationship, which open into a fluid inlet chamber (3) with first ends and which open into a fluid outlet chamber (4) with second ends, wherein the fluid inlet chamber (3) and the fluid outlet chamber (4) are integrally connected with the panel (1) in a liquid-tight manner and are provided with connecting elements (5, 6) integrally connected therewith for connection to a liquid supplying and discharging device, **characterized in that** said construction plate includes a metal layer (9), whereby the plate-shaped panel (1) *abuts against said metal layer (9,16) and* is disposed on a side of the metal plate (9,16) that faces towards said insulating layer (10).

2. A constructional element (7, 15) according to claim 1, **characterized in that** said fluid is water or glycol.

3. A constructional element (7, 15) according to any one of the preceding claims, **characterized in that** said constructional element (7, 15) is a roof element, wherein said plate-shaped panel (1) is disposed on a side of the roof element that faces towards the outside.

4. A constructional element (7, 15) according to any one of the preceding claims, **characterized in that** said constructional element (7, 15) is made of polypropylene.

5. A constructional element (7, 15) according to claims 1, 2 or 4 **characterized in that** said constructional element is a floor heating element, wherein said plate-shaped panel (1) is disposed on said construction plate, with a cover layer being present on said plate-shaped panel (1).

6. A constructional element (7, 15) according to claims 1, 2 or 4, **characterized in that** said constructional element is a floor heating element, wherein said plate-shaped panel (1) is disposed under said construction plate.

7. A constructional element (7, 15) according to claims 1, 2 or 4, **characterized in that** said constructional element comprises an outside wall element, wherein said plate-shaped panel (1) is disposed on a side of the outside wall element that faces towards the outside.

8. A roof construction provided with a constructional element (7, 15) according to claims 1-4.

## Patentansprüche

1. Konstruktionselement (7, 15) mit mindestens einer Konstruktionsplatte, die eine Isolationsschicht (10) aufweist, wobei das Konstruktionselement (7, 15) außerdem mindestens eine plattenförmige Tafel (1) aufweist, die an die Konstruktionsplatte angeschlossen ist, wobei die Tafel (1) eine Anzahl Strömungskanäle (2) aufweist, die nebeneinander parallel angeordnet sind und die sich mit ersten Enden in eine Fluideinlasskammer (3) und mit zweiten Enden in eine Fluidauslasskammer (4) öffnen, wobei die Fluideinlasskammer (3) und die Fluidauslasskammer (4) mit der Tafel (1) integral flüssigkeitsdicht verbunden und mit integral verbundenen Anschlusselementen (5, 6) zum Anschluss an eine Flüssigkeitszufuhr- und -ausgabevorrichtung versehen sind,
**dadurch gekennzeichnet,**
**dass** die Konstruktionsplatte eine Metallschicht (9) enthält, wobei die plattenförmige Tafel (1) an der Metallschicht (9) anliegt und an einer Seite der Metallplatte (9, 16) angeordnet ist, die der Isolationsschicht (10) zugewandt ist.

2. Konstruktionselement (7, 15) nach Anspruch 1,
**dadurch gekennzeichnet,**
**dass** das Fluid Wasser oder Glykol ist.

3. Konstruktionselement (7, 15) nach einem der vorhergehenden Ansprüche,
**dadurch gekennzeichnet,**
**dass** das Konstruktionselement (7, 15) ein Dachelement ist, wobei die plattenförmige Tafel (1) an einer Seite des Dachelementes angeordnet ist, die der Außenseite zugewandt ist.

4. Konstruktionselement (7, 15) nach einem der vorhergehenden Ansprüche,
**dadurch gekennzeichnet,**
**dass** Konstruktionselement (7, 15) aus Polypropylen hergestellt ist.

5. Konstruktionselement (7, 15) nach Anspruch 1, 2 oder 4,
**dadurch gekennzeichnet,**
**dass** das Konstruktionselement ein Bodenheizungselement ist, wobei die plattenförmige Tafel (1) an der Konstruktionsplatte angebracht ist, wobei an der plattenförmigen Tafel (1) eine Deckschicht vorhanden ist.

6. Konstruktionselement (7, 15) nach Anspruch 1, 2 oder 4,
**dadurch gekennzeichnet,**
**dass** das Konstruktionselement ein Bodenheizungselement ist, wobei die plattenförmige Tafel (1) unter der Konstruktionsplatte angeordnet ist.

7. Konstruktionselement (7, 15) nach Anspruch 1, 2 oder 4,
**dadurch gekennzeichnet,**
**dass** das Konstruktionselement ein Außenwandelement aufweist, wobei die plattenförmige Tafel (1) an einer Seite des Außenwandelementes angeordnet ist, die der Außenseite zugewandt ist.

8. Dachkonstruktion, die mit einem Konstruktionselement (7, 15) nach einem der Ansprüche 1 bis 4 versehen ist.

## Revendications

1. Un élément de construction (7, 15) comprenant au moins une plaque de construction (10) comprenant une couche d'isolation, lequel élément de construction (7, 15) comprend de plus au moins un panneau en forme de plaque (1) connecté à la plaque de construction, lequel panneau (1) comprend un certain nombre de canaux d'écoulement (2) disposés en parallèle, côte à côte, lesquels s'ouvrent dans une chambre d'admission de fluide (3) par leurs premières extrémités et qui s'ouvrent dans une chambre de sortie de fluide (4) par leurs secondes extrémités, où la chambre d'admission de fluide (3) et la chambre de sortie de fluide (4) sont connectées intégralement avec le panneau (1) de manière étanche aux fluides et sont munies d'éléments de connexion (5, 6) intégralement connectés avec celles-ci pour une connexion avec un dispositif d'alimentation et d'évacuation de fluide, **caractérisé en ce que** ladite plaque de construction comprend une couche de métal (9), ce par quoi le panneau en forme de plaque (1) *vient en butée contre ladite couche de métal (9, 16) et* est disposé sur le côté de la plaque de métal (9, 16) qui fait face à ladite couche d'isolation (10).

2. Un élément de construction (7, 15) selon la revendication 1, **caractérisé en ce que** ledit fluide est de l'eau ou du glycol.

3. Un élément de construction (7, 15) selon l'une ou l'autre des revendications précédentes, **caractérisé en ce que** ledit élément de construction (7, 15) est un élément de toit, dans lequel ledit panneau en forme de plaque (1) est disposé sur le côté de l'élément de toit qui fait face vers l'extérieur.

4. Un élément de construction (7, 15) selon l'une quelconque des revendications précédentes, **caractérisé en ce que** ledit élément de construction (7, 15) est fait en polypropylène.

5. Un élément de construction (7, 15) selon les revendications 1, 2 ou 4, **caractérisé en ce que** ledit élément de construction est un élément de chauffage par le sol, dans lequel ledit panneau en forme de plaque (1) est disposé sur ladite plaque de construction, avec une couche de couverture présente sur ledit panneau en forme de plaque (1).

6. Un élément de construction (7, 15) selon les revendications 1, 2 ou 4, **caractérisé en ce que** ledit élément de construction est un élément de chauffage par le sol, dans lequel ledit panneau en forme de plaque (1) est disposé sous ladite plaque de construction.

7. Un élément de construction (7, 15) selon les revendications 1, 2 ou 4, **caractérisé en ce que** ledit élément de construction comprend un élément de cloison extérieure, dans lequel ledit panneau en forme de plaque (1) est disposé sur un côté de l'élément de cloison extérieure qui fait face vers l'extérieur.

8. Une construction de toit équipée d'un élément de construction (7, 15) selon les revendications 1 à 4.
